# EUROPEAN PATENT APPLICATION

(11) **EP 1 052 764 A1**
(43) Date of publication of application: **15.11.2000**
(21) Application number: 00201656.6
(22) Date of filing: 09.05.2000
(51) Int. Cl.: H02P 1/46, H02K 29/08

(54) **Electronic device for starting and controlling a synchronous single-phase electric motor of the type comprising a rotor with permanent magnets.**

(30) Priority: 14.05.1999 IT MI991062
(71) Applicant: G.E.C. Global Engineering Company SRL, 36064 Villaraspa di Mason (Vicenza) (IT)
(72) Inventor: Roman, Guido, 36042 Breganze, (Vicenza) (IT)
(74) Representative: Michelotti, Giuliano

(57) **Abstract**

An electronic device for starting and controlling a synchronous single-phase electric motor (10) with a permanent-magnet rotor (20) comprises a Hall-effect magnetic field probe (32) positioned in the vicinity of an air-gap opening (21) of a magnetic stator core (14), intended to receive the permanent-magnet rotor (20), in a position such as to sense, predominantly, the magnetic flux generated by the permanent magnets and, in a marginal manner, the flux generated by the alternating supply current of windings (16, 18) driving the magnetic stator core (14), and an electronic processor (40) which manages control of the power supply of said windings (16, 18) so as to allow starting of the said motor until the synchronism speed is reached.

## Description

The present invention relates to the scope of synchronous single-phase electric motors and, in particular, to an electronic device for staffing and controlling a synchronous single-phase electric motor of the type comprising a rotor with permanent magnets.

For some time now synchronous single-phase electric motors with a permanent-magnet rotor, which have certain advantages such as high speed of rotation, torque proportional to the current used and very small dimensions compared to the mechanical output power, have been known and used.

Synchronous motors, however, must overcome certain inherent drawbacks which are mainly as follows:
a) difficulty in starting when directly connected to an alternating-current network;
b) limitation of the surge torque, associated with the fact that the magnetic flux due to the inductor coils (i.e. the stator windings) must not produce magnetic fields with such an intensity demagnetizing the permanent magnets of the rotor;
c) difficulty in obtaining the synchronism between the speed of rotation and the network frequency in the event of sudden variations in load;
b) difficulty in maintaining a preset direction of rotation.

The prior art has proposed various solutions to deal with the abovementioned difficulties, resulting in varying degrees of success.

A first solution, described in Italian Patent No. 01,259,115 and in its corresponding US Patent No. 5,434,491, in order to start a synchronous electric motor with a permanent-magnet rotor and reach the synchronism speed, suggests energising such a motor by means of an electrical supply network via a static switch controlled by an electronic circuit which takes into account three parameters, i.e. the current flowing across the stator windings of the motor, the position and the polarity of the permanent magnet of the rotor and the polarity of the alternating voltage of the electrical supply network, so as to allow the static switch to conduct only when the flux generated by the stator winding produces on the motor a torque corresponding to the direction of rotation of the said rotor.

This system operates fairly well, but in order to obtain satisfactory synchronisation between the detected position and the polarity of the permanent magnet of the rotor, the zero crossing of the current in the stator windings and the polarity of the alternating current of the electrical supply network, it has been necessary to introduce a physical system for phase displacement of the signal of the probe sensing the position of the rotor permanent magnet in order to ensure correct starting thereof. In order to achieve this, the sensor must be positioned very close to the said rotor, with the result that the sensor is also affected by the magnetic field generated by the stator windings, thereby causing it to misinterpret the signal due to the windings, mistaking it for a signal relating to rotation at the speed of synchronism of the rotor and, therefore, regarding as freely rotating a motor which is actually stopped.

A slightly different solution, which is disclosed in European Patent No. 0,654,890, suggests energising the stator windings of the motor with half waves of the alternating supply voltage which are chosen with a first polarity or with the opposite polarity depending on whether a position sensor detects that the rotor is in a first range of positions (therefore having the permanent magnets oriented in a first direction) or in a second range of positions, having the permanent magnets oriented in a second direction, opposite to the first direction, so as to accelerate the said rotor, energising of the stator windings occurring via an alternating-current static switch (basically a triac) which is made to conduct by command pulses which last for a period of time slightly greater than that during which the current, via the same static switch, is at the minimum value for maintaining conduction, these pulses starting slightly before the current falls below the holding value and ending shortly after the current has exceeded the holding value. Alternatively, the gate pulses of the triac are delayed in a controlled manner so as to cause them to start when, via the same triac, a current greater than the minimum holding current may be envisaged. Moreover, in order to determine the value of the current via the triac, it is necessary to use a current sensor connected in series to the circuit of the stator windings. Alternatively, it is possible to make do simply with determining when the triac is able to assume the conduction state, detecting the drop in voltage at its terminals, since this voltage substantially coincides with that of the network for as long as the triac is inhibited.

Another similar system is described in Italian Patent No. 01,269,755 and in its corresponding European Patent No. 0,682,404, which system, for a synchronous singlephase motor supplied by an alternating network voltage via a static switch, uses data relating to the position of the permanent-magnet rotor, supplied by at least one position sensor, and data relating to the voltage at the terminals of the static switch, which are processed by a processing device already known. This system, moreover, in order to be able to start and move a synchronous motor in both directions, must use two position sensors, instead of one.

All the abovementioned systems of the prior art operate fairly well, but encounter a problem when detecting the position of the permanent-magnet rotor due to the fact that the magnetic fields generated by the permanent magnets of the rotor and those generated by the currents in the stator winding, respectively, have the same level of intensity such that, should a position probe, comprising a Hall-effect magnetic sensor, be used, this sensor would detect a magnetic field intensity representing the vectorial sum of the two respective intensity values so that errors in correlation between the field intensity read by the sensor and the actual position of the permanent-magnet rotor would arise.

In order to overcome this drawback, two solutions been proposed:
- a first solution consists in using an optical position reader, which reads the passing of regular zones as broken surface lines which have a different colour or are alternately transparent and opaque;
- a second solution consists in using again a Hall-effect magnetic sensor, but on a permanent-magnet rotor having an axial length far greater than the height of the lamination pack of the stator, positioning the sensor at one end of the rotor, and therefore outside of the lamination pack and the magnetic field generated by the windings, so as to minimise the effect of the said field.

Both the solutions are valid, but have certain drawbacks. The first solution is not only costly, but is also subject to malfunctions due to soiling of the optical parts caused by environmental impurities which may result in problematic or incorrect optical reading of the position, so that it is unsatisfactory from the point of view of cost efficiency and reliability. The second solution could be more reliable, but gives rise to the drawbacks of greater cost, dimensions and weight of the rotor which must be lengthened, and these drawbacks cannot always be tolerated.

By way of conclusion, one object of the present invention is to provide a synchronous single-phase motor provided with an electronic start-up device which is not only unaffected by the drawbacks resulting from the uncertainty in determining the position, as occurs in the prior art, but also does not involve substantial changes to the structure of the motor.

Another object of the present invention is to control start-up of the synchronous single-phase motor even when there are exceptional starting torques due, for example, to the presence of particularly viscous liquids in a pump operated by the said synchronous motor or the seizing of mechanisms operated by the same motor.

The abovementioned objects are achieved by an electronic start-up and control device, according to the present invention, controlling a synchronous single-phase motor, formed by a static provided with at least one winding and by a permanent-magnet rotor with a cylindrical shape, characterized by:
a Hall-effect magnetic field probe positioned in the vicinity of an air-gap of a magnetic core of the stator in front of an opening which is defined between two pole shoes of the said stator core and which exposes a lateral surface zone of the said rotor in any position between the ends of a lamination pack of the stator core and at a distance at which the Hall-effect probe senses mainly the magnetic field due to the permanent-magnet rotor and, in a marginal manner, the magnetic field due to the magnetic flux generated by the stator windings, said air-gap defining, in applications involving hydraulic pumps, a space sufficient for forming a channel for recirculation of pumped fluid used for lubricating and cooling the rotor chamber;
a first analog processing electronic circuit which receives the signal from the Hall-effect probe which senses both the magnetic field due to the permanent magnets and the field due to the flux of the windings and attenuates the signal due to the flux of the windings and then squares this signal in a threshold circuit provided with hysteresis, obtaining a rectangular signal having rise and fall times independent of the rise and fall times of the signal from the Hall-effect probe;
a second digital processing circuit which, comparing a squared signal, associated with a supply network voltage, with the said rectangular signal from the first analog processor circuit, generates driving signals for a static switch whenever the signal associated with the network voltage and the signal from the analog processor circuit indicate that the action of the flux of the permanent-magnet rotor together with the action due to the stator windings would cause a rotation of the rotor always in the same direction, and does not generate driving signals when the action of the flux of the permanent-magnet rotor together with the action due to the stator windings would cause a rotation of the rotor in the reverse direction, the said second digital electronic circuit also processing the situations where the rotor is blocked, with attempts at unblocking it and imparting rotations to the rotor in alternate directions, said attempts terminating in a situation of stoppage of the motor and stoppage with alarm if the attempts are unsuccessful after a certain number thereof.

The features of the present invention will be defined in the claims forming the conclusive part of the description. However, other features and advantages will emerge from the following detailed description of an embodiment thereof, with reference to the accompanying drawings, in which:
- Figure 1 is a schematic view of a synchronous single-phase motor with a permanent-magnet rotor, containing the present invention;
- Figure 2 is an enlarged and partial view of a Hall-effect magnetic field probe positioned so as to achieve the objects of the present invention;
- Figure 3 is a partially sectioned side view of a synchronous single-phase motor provided with a printed-circuit board housing an electronic circuit, according to the present invention, capable of starting up the motor and keeping it in synchronism;
- Figure 4 is an electrical diagram of an analog circuit which has the function of converting the signal of a Hall-effect probe into a signal which can be directly used in digital processor circuits;
- Figure 5 is an electrical diagram of a circuit comprising a digital microprocessor and a solid-state switch for controlling the current supply to the synchronous motor;
- Figure 6 shows a first part of a flowchart of a program, loaded in the microprocessor, for managing start-up and synchronism of the motor;
- Figure 7 shows a second part of the flowchart for the abovementioned management program; and
- Figure 8 shows a flowchart of the program, loaded in the microprocessor, for managing the pre-alarm condition and, at last, stopping the motor.

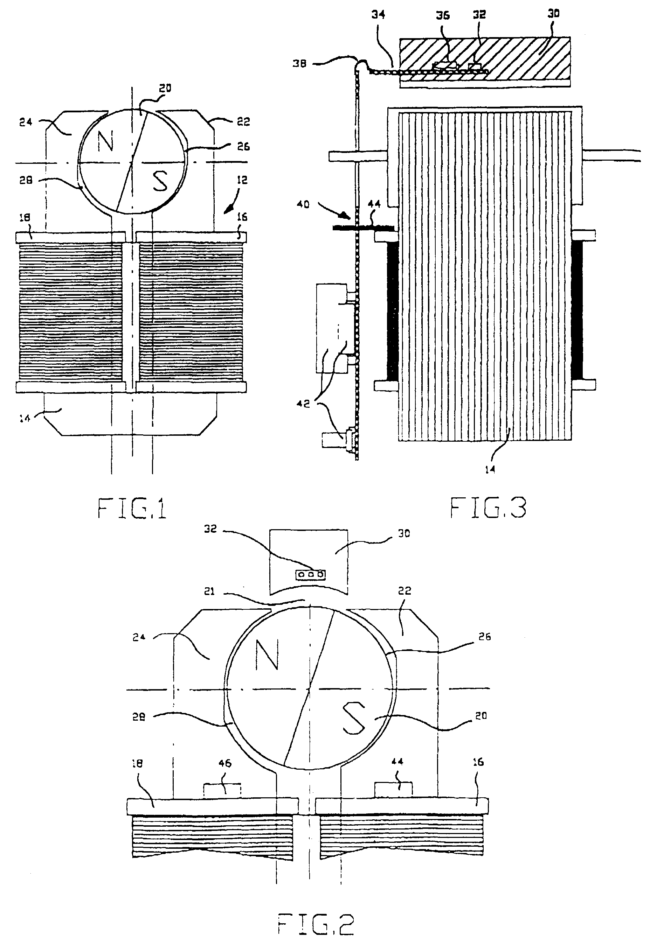

Looking at Figure 1, it can be seen that a synchronous motor 10 is formed by a stator 12, comprising a lamination pack core 14 having, mounted on it, two wound coils 16 and 18, and by a cylindrical rotor 20 comprising two magnetic poles (N and S) of a permanent magnet, which are shaped so as to form together the cylinder of the rotor 20, arranged between two pole shoes 22 and 24 of the core 14 of the stator 12. The pole shoes 22 and 24 and the rotor 20 have, between them, a non-uniform air-gap which is formed by two halves 26 and 28 and has the function of preventing angularly random positioning of the rotor 20 when it stops. All of that described and illustrated above with regard to a single-phase motor provided with a permanent-magnet rotor is already known from publications of the prior art, as disclosed, for example, in Italian Patent No. 01,259,115 and its corresponding US Patent No. 5,434,491.

The first feature which distinguishes the invention described herein from the prior art is a choice of position for a Hall-effect magnetic probe such that it is able to sense, to a maximum extent, the magnetic field generated by the two poles N and S of the permanent-magnet rotor 20 and, to negligible extent, the magnetic field due to the flux generated by the windings 16 and 18 through which the alternating network current passes. This characteristic feature is depicted in Figures 2 and 3.

From the abovementioned figures it can be seen that, a Hall-effect probe 32 is positioned within the area 30, alongside the permanent-magnet rotor 20, more precisely in front of the opening 21 defined by the gap between the pole shoes 22 and 24. So that the probe 32 senses mainly the magnetic field generated by the N and S poles of the permanent-magnet rotor 20 and marginally or not at all the magnetic field due to the flux of the windings 16 and 18, the area 30 is located in front of the abovementioned opening 21 at a distance of between 2 and 12 mm and, preferably, 3 and 10 mm. It is advisable not to reduce said distance to values of less than 3 mm since it is necessary to leave a space for circulation of cooling fluid around the rotor 20, said fluid, in the case where the motor is used to operate pumps, such as washing pumps, being the same water moved by the pump. As can be seen in particular in Figure 3, the probe 32 may be positioned along the opening 21 between the pole shoes at any point, preferably within the thickness of the lamination pack 14. The probe 32 is soldered to a printed circuit board 34 housing the electronic components 36 forming the analog processing section for converting the signal from the Hall-effect probe 32 into a digital signal and connected, by means of a multiple cable 38, to another printed circuit board 40 housing electronic components 42 forming the digital processing section for power-switching the circuit controlling the synchronous motor, the printed circuit board 40 of the digital power section being connected by means of terminals 44 and 46 which can be soldered.

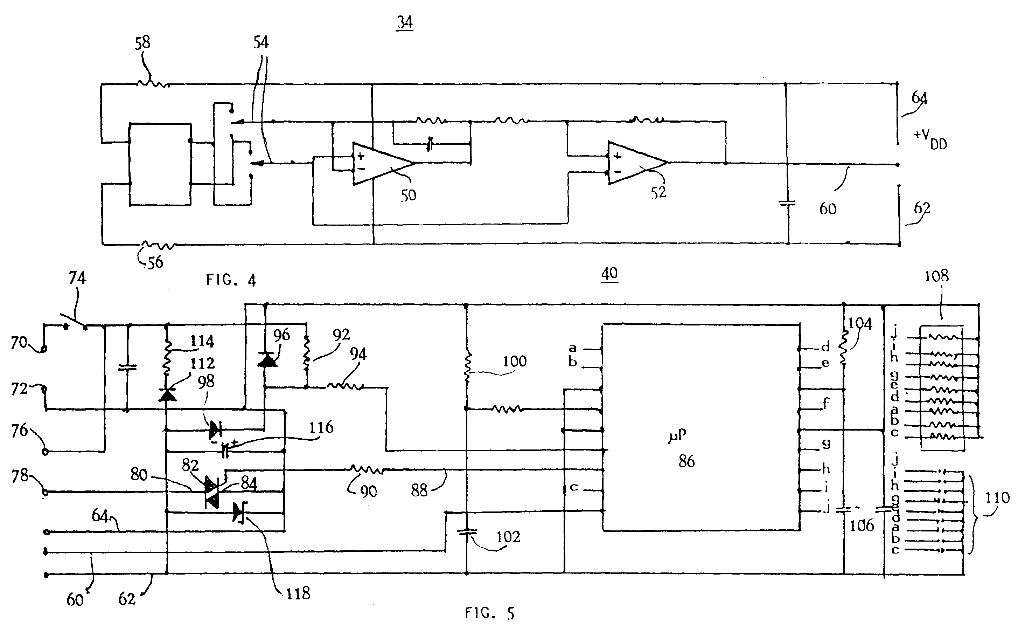

As can be seen in Figure 4, the analog processing section 34 for digital conversion of the analog signal from the Hall-effect probe 32 comprises the said probe 32, a first differential amplifier 50 connected as an integrator circuit which eliminates the most rapid transient noise, and a second differential amplifier 52 connected as a threshold trigger with hysteresis (similar to a Schmitt circuit) which squares the analog signal from the amplifier 50 so as to obtain signals of the rectangular type, with rise and fall times independent of the rise and fall times of the signal output by the Hall-effect probe 32, the magnitude of the hysteresis between the thresholds being such as to determine the rise and fall of the signal output by the second amplifier 52 so as to ignore any signal due to the flux in the coils, superimposed on that due to the field of the permanent magnets. With the aid of the dual-position two-way switch 54 it is possible to use all the types of Hall-effect probes which are available in trade. The probe 32 is equipped at the supply terminals with two current-limiting resistors 56 and 58 which have dimensions such that, in the absence of magnetic fields passing across the probe 32, the voltages at the output terminals of the probe 32 are the same and at the mid-way point of the supply voltage supplied to the two differential amplifiers 50 and 52.

At last, at an output terminal 60 of the processing circuit according to Figure 4 there is a squared signal which can be directly used by digital electronic circuits and which takes account only of the magnetic field due to the permanent magnets of the rotor and not that due to the flux in the coils.

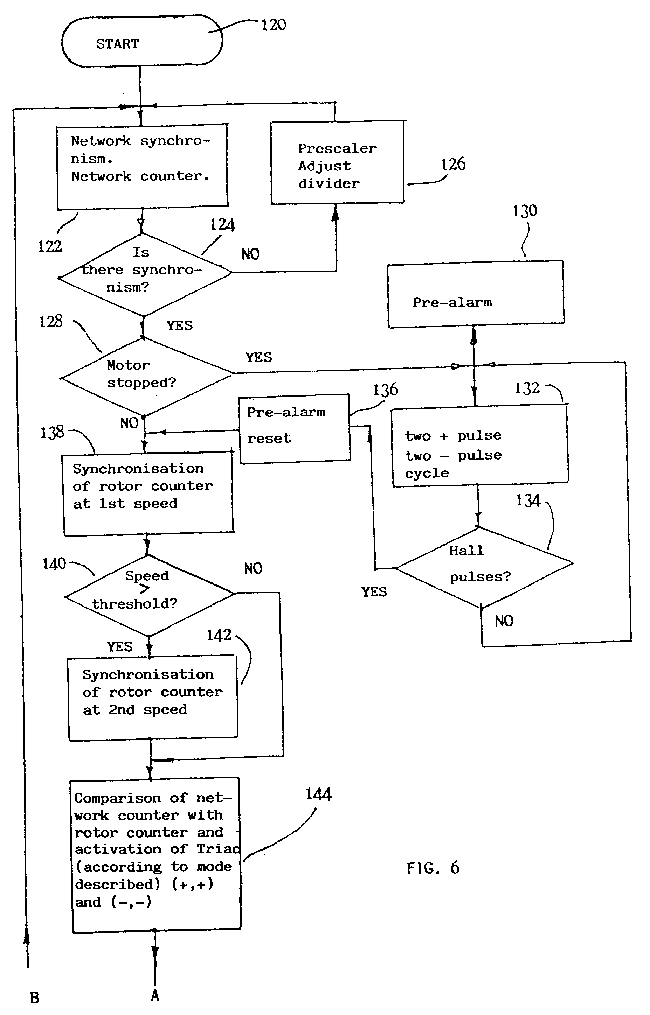

If we now consider Figure 5, this shows a digital control circuit 40 which comprises two terminals 70 and 72 which are connected to an alternating-current electrical network and one of which (70) is connected to the power supply of the circuit 40 via a switch 74 which also controls the power supply at two terminals 76 and 78 for connection to coils of a synchronous single-phase electric motor, where the terminal 76 is directly connected to the switch 74 and the terminal 78 is connected to one of the anodes 80 of a triac 82, the second anode 84 of which is directly connected to the terminal 72 of the alternating-current electrical network. The circuit 40 also contains a microprocessor µP 86 which controls the triac 82 via a conductor 88 and a resistor 90 connected to the gate electrode of the said triac 82. The microprocessor µP 86 receives, on a conductor 60, the squared signal from the output terminal 60 of the circuit according to Figure 4, indicating the angular position of the permanent-magnet rotor 20. The same microprocessor µP 86 receives, via two resistors 92, 94 connected to the alternating-current network and provided with two voltage-limiting diodes 96 and 98, a signal for synchronisation with the network. Again the said microprocessor µP 86 receives, from an assembly formed by a resistor 100 and a capacitor 102, a signal for resetting the microprocessor when it is activated. Moreover, again, the said microprocessor 86 receives a scanning or clock signal generated by a group which is formed by a resistor 104 and a capacitor 106 and which determines the frequency of the said internal clock obtained from the network. The microprocessor 86 has, loaded internally, programs which have the function of controlling energisation of the motor via the triac 82, performing the functions of synchronising and maintaining the speed of rotation of the motor 10 as well as additional functions involving safety management of the motor, depicted in the flowcharts shown in Figures 6 to 8, which will be described in detail further below. The terminals a to j of the microprocessor 86 are connected via a group of resistors 108 to the direct supply voltage, so as to be kept in the high logic state, unless, by connection via one of the contacts of the group 110, one of these terminals is to be switched to the low state so that it is possible to enable or disable the motor by means of digital external inputs. The direct-current power supply of the microprocessor 86 is provided by an assembly consisting of a power rectifier diode 112, a voltage-reduction resistor 114, a levelling capacitor 116 and a Zener diode 118, stabilising the power supply voltage of the two electronic circuits, i.e. both the analog circuit 34 and the digital circuit 40.

Let us now consider Figures 6, 7 and 8 which show flowcharts of programs, loaded in the microprocessor 86, for carrying out the functions of start-up and maintaining the synchronism speed and for the alarm and stoppage conditions, respectively.

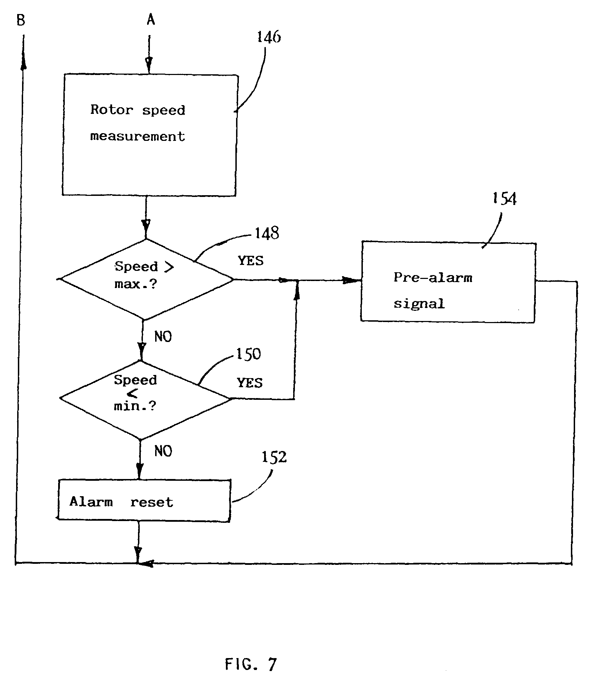

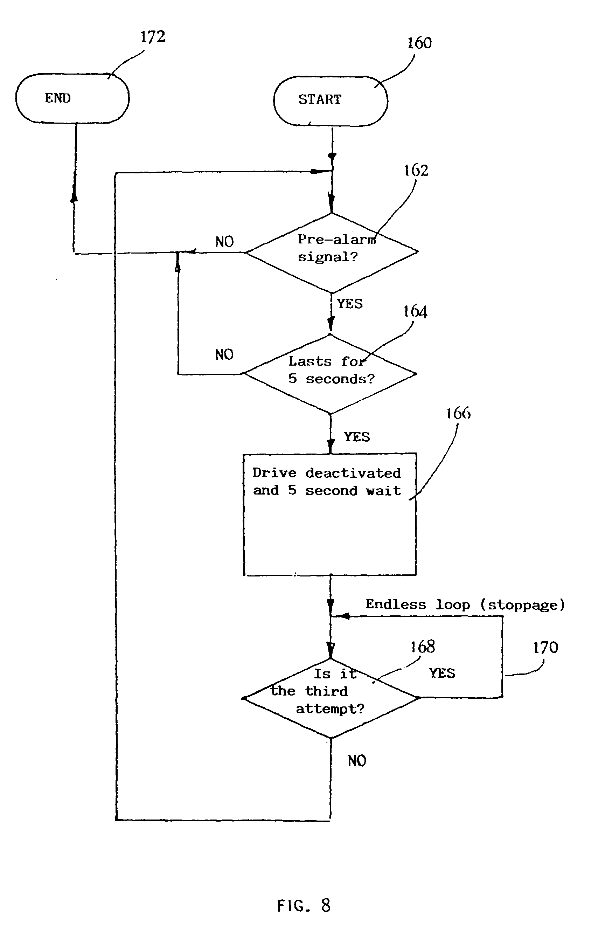

If we examine firstly Figures 6 and 7, it can be seen that the program for managing start-up and maintaining the synchronism of the motor commences with a start step 120 followed by an action step 122 which determines the network synchronism, by counting, by means of a network counter, pulses generated by the alternating network current via the circuit formed by the resistor 92 and the pair of diodes 96 and 98 (Figure 5). A decision step 124 determines whether there is synchronism. If there is no synchronism (option NO), an action step 126 adjusts a divider until synchronism occurs. If there is synchronism (option YES), a following decision step 128 determines whether the motor is at a standstill. If it is (option YES), the program passes to the pre-alarm activation step and, at the same time, to the action step 132 for a two-pulse cycle in one direction followed by a two-pulse cycle in the opposite direction (cycles 2+ and 2-). Then a decision step 134 indicates whether there are pulses from a Hall-effect magnetic probe, i.e. whether rectangular pulses indicating changes in the magnetic field of the rotor 20 and hence its rotation appear on the conductor 60. If they do not appear (option NO), this means that the rotor is blocked and the program returns to the alarm condition of the step 130. If the pulses appear (option YES), the pre-alarm is reset by the action step 136 "Reset alarm" and the program returns to the sequence for motor in movement (option NO of the decision step 128 for motor at a standstill). An action step 138 performs setting of a rotor counter, with the pulse of the conductor 60 due to the Hall-effect probe, at a first predefined phase value if corresponding to a low speed (coincidence of number of pulses counted by the counter in a unit of time with a predefined number indicating a first speed). A decision step 140 indicates whether the speed measured is greater than a predetermined threshold. If YES, the rotor counter is synchronised with a second phase value by an action step 142; if NO, the preceding value is maintained. In any case, an action step 144 compares the network counter with the rotor counter and activates the triac 82 when the network counter coincides with the rotor counter, therefore maintaining the synchronism; the setting of suitable phase values determines the start-up procedure as well as the direction of rotation. Then, as can be seen in Figure 7 a decision step 146 measures the speed of the rotor. A decision step 148 checks whether the speed of the rotor is greater than a predefined maximum speed. If NO, a subsequent decision step 150 checks whether the speed of the rotor is less than a predefined minimum speed. If NO, the alarm condition is cancelled (action step "Reset alarm") and the program returns to the start in order to maintain the speed of the rotor at the synchronisation speed, compensating for any variation in load which causes it to vary. If the answers are YES to one of the decision steps 148 or 150, the action step 154 activates the pre-alarm signal managed in accordance with the cycle depicted in Figure 8.

With reference now to Figure 8, it can be seen that management of the pre-alarm condition begins with a start step 160 and then passes to a decision step 162 which determines whether there is a pre-alarm signal. If there is no signal (option NO), the management program immediately passes to the end of management 172. If there is a signal (answer YES), a decision step 164 determines whether this pre-alarm condition lasts for five seconds. If it lasts for less (option NO), the management program passes immediately to the end of management 172. If it lasts for five seconds or more, an action step 166 deactivates the drive of the stator and waits for five seconds. After deactivation and the five second wait, a decision step 168 asks whether this was the third attempt. If it was not (option NO), the management program returns to the start. If it is (option YES), the alarm management program remains closed in an endless loop 170, causing definitive stoppage of the motor which would then require some manual reset action which could consist in simple opening and closing again of the switch 74 according to the diagram in Figure 5, which would cause resetting of the microprocessor µP 86 and therefore re-enabling of the flowchart programs illustrated in Figures 6 to 8,

The above describes an embodiment of the invention which is not to be regarded in any way as limiting, it being understood that any person skilled in this particular art could make logical and equivalent changes to be regarded as all covered in the accompanying claims forming the conclusive part of this description.

## Claims

1. Electronic device for starting and controlling a synchronous single-phase electric motor of the type comprising a rotor with permanent magnets, formed by stator (12) provided with at least one winding (16, 18) and by a permanent-magnet rotor (20) with a cylindrical shape, characterized by:
a Hall-effect magnetic-field probe (32) positioned in the vicinity of an air-gap of a magnetic core of the stator in front of an opening (21) which is defined between two pole shoes (22, 24) of the core (14) of said stator (12) and which exposes a lateral surface zone of the said rotor (20) in any position between the ends of a lamination pack of the stator core (14) and at a distance at which the Hall-effect probe (32) senses mainly the magnetic field due to the permanent-magnet rotor (20) and, in a marginal manner, the magnetic field due to the magnetic flux generated by the stator windings (16, 18), said air-gap defining, in applications involving hydraulic pumps, a space sufficient for forming a channel for recirculation of pumped fluid used for lubricating and cooling the rotor chamber;
a first analog processor electronic circuit (34) which receives the signal from the Hall-effect probe (32) which senses both the magnetic field due to the permanent magnets and the field due to the flux of the windings (16, 18) and attenuates the signal due to the flux of the windings and then squares this signal in a threshold circuit (52) provided with hysteresis, obtaining a rectangular signal (60) having rise and fall times independent of the rise and fall times of the signal supplied by the Hall-effect probe (32);
a second digital processor circuit (40) which, comparing a squared signal, associated with a supply network voltage, with the said rectangular signal (60) from the first analog processor circuit (34), generates driving signals (88) for a static switch (82) whenever the signal associated with the network voltage and the signal from the analog processor circuit (34) indicate that the action of the flux of the permanent-magnet rotor (20) together with the action due to the stator windings (16, 18) would cause a rotation of the rotor (20) always in the same direction, and does not generate driving signals when the action of the flux of the permanent-magnet rotor (20) together with the action due to the stator windings (16, 18) would cause a rotation of the rotor (20) in the reverse direction, the said second digital electronic circuit (40) also managing the situations where the rotor is blocked, with attempts at unblocking it and imparting rotations to the rotor in alternate directions, said attempts terminating in a situation of stoppage of the motor and stoppage with alarm if the attempts are unsuccessful after a certain number thereof.

2. Electronic device for starting and controlling a synchronous single-phase electric motor, according to Claim 1, characterized in that the Hall-effect magnetic field probe (32) is positioned in front of the opening (21) between the pole shoes (22, 24) of the core (14) at a distance from the rotor (20) of between 2 and 12 mm.

3. Electronic device for starting and controlling a synchronous single-phase electric motor, according to Claim 2, characterized in that the Hall-effect magnetic field probe (32) is positioned in front of the opening (21) at a distance of between 3 and 10 mm.

4. Electronic device for starting and controlling a synchronous single-phase electric motor, according to Claim 3, characterized in that the Hall-effect magnetic field probe (32) is positioned in front of the opening (21) at a distance of not less than 3 mm.

5. Electronic device for starting and controlling a synchronous single-phase electric motor, according to the preceding claims, characterized in that the analog processor circuit (34) driven by the Hall-effect magnetic field probe (32) is formed by a first differential amplifier (50), connected as an integrator circuit, for attenuating noise at relatively high frequencies or rapid transient noise and by a second differential amplifier (52) connected as a threshold circuit with hysteresis (such as a Schmitt trigger) for converting the signal, from the amplifier (50) connected to the integrator, into a rectangular signal (60) which can be used as a digital signal for the following digital processing circuit (40), the rectangular signal (60) having rise and fall times independent of the rise and fall times of the signal from the Hall-effect probe (32).

6. Electronic device for starting and controlling a synchronous single-phase electric motor, according to Claim 5, characterized in that the digital electronic processor circuit (40) essentially comprises a digital microprocessor (68) which receives the rectangular signal (60), representing the digitised signal of the Hall-effect probe (32), a voltage signal, at a terminal (70), of the power supply line which is digitised, namely made rectangular, by a supply voltage detection assembly formed by at least one resistor (92) and by a pair of voltage-limiting diodes (96, 98) and, using these two signals, drives by means of a control signal (88) a gate electrode operating a static switch (82) connected between a terminal (72) of the power supply line and a terminal (78) for connection to the stator windings (16, 18) of the synchronous motor, the control signal (88) turning the angular position of the rotor with the polarity of the supply voltage to be applied to the windings (16, 18) in order to keep the direction of rotation unaltered.

7. Electronic device for starting and controlling a synchronous single-phase electric motor, according to Claim 6, characterized in that the digitised network signal enters into a first cyclical counter which is provided by a program of the microprocessor (86) and is synchronous with the network and which, during a first half of its cycle, allows positive half-waves to pass through and, during a second half, allows negative half-waves to pass through the static switch (82).

8. Electronic device for starting and controlling a synchronous single-phase electric motor, according to the preceding claims, characterized in that, in the case where the rotor (20) is at a standstill and therefore there are no signals from the Hall-effect probe (32), the digital microprocessor (86) applies to the motor, via the static switch (82), two half-waves with a first polarity, followed by two half-waves with an opposite polarity, so as to cause intense stressing of the rotor (20) so as to dislodge it also in the case where there is initial friction typical of systems immersed in fluids.

9. Electronic device for starting and controlling a synchronous single-phase electric motor, according to Claim 8, characterized in that, once the pulses from the Hall-effect probe (32) reach the microprocessor (86), they enter into a second cyclical counter which is provided by the program of the microprocessor (86) and which simulates the rotation of the rotor, the static switch (82) being operated only when both the counters are in the first half or in the second half of their cycle.

10. Electronic device for starting and controlling a synchronous monophase electric motor, according to the preceding claims, characterized in that, in the event of a pre-alarm due to loss of synchronism between the speed of rotation of the rotor (20) and the frequency of the network power supply or due to persistence of the rotor stopped state, a pre-alarm cycle starts, checking first of all whether the pre-alarm is present and then checking whether it lasts for five seconds, and, if it lasts for five seconds or more, deactivates excitation for five seconds, then re-attempting activation and, if three attempts are unsuccessful, causing a permanent blocked state of the rotor, achieved by interrupting definitively drive of the stator windings (16, 18) by means of deactivation of the static switch (82), this deactivation being able to be interrupted only by means of manual resetting of the microprocessor (86).

11. Electronic device for staffing and controlling a synchronous single-phase electric motor, according to Claim 10, characterized in that the manual resetting operation consists in momentary interruption of the power supply to the microprocessor (86) followed by restoration thereof.

12. Electronic device for starting and controlling a synchronous single-phase electric motor, according to Claim 11, characterized in that the manual resetting operation consists in a momentary interruption of the power supply both to the microprocessor (86) and to the motor.
